# EUROPEAN PATENT SPECIFICATION

(11) **EP 3 128 190 B1**
(45) Date of publication and mention of the grant of the patent: **22.09.2021**
(21) Application number: 15180038.0
(22) Date of filing: 06.08.2015
(51) Int. Cl.: F16B 35/06

(54) **SCREW CAPABLE OF CUTTING AND COMPRESSING DREGS IN AN OBJECT TO BE DRILLED**
SCHRAUBE, DIE GEEIGNET IST ZUM SCHNEIDEN UND VERDICHTEN VON BODENSATZ IN EINEM ZU BOHRENDEN OBJEKT
VIS CAPABLE DE DÉCOUPER ET DE COMPRIMER DES DÉPÔTS DANS UN OBJET À PERCER

(43) Date of publication of application: 08.02.2017
(73) Proprietor: Fong Prean Industrial Co., Ltd., Kaohsiung Hsien (TW)
(72) Inventor: LIN, Teng-Hung, Kaohsiung Hsien (CN)
(74) Representative: Treeby, Philip David William

(56) References cited:
- DE-A1- 2 324 675
- DE-A1- 3 706 144
- US-A- 2 199 809
- US-A- 3 322 019
- None

## Description

### FIELD OF THE INVENTION

The present invention relates to screws; and in particular to a screw with winding ribs thereon for cutting dregs in drilling and compressing the dregs therein so that the dregs expose out after screwing.

### BACKGROUND OF THE INVENTION

Screws are used to fix one object to another one. The design of the screw is based on the materials and characteristics of the materials.

However, in screwing, material features of the screw, such as hardness, density and textures of the materials, will induce the problems such that in drilling, the dregs from drilling left on outer side of the wall of the object to be drilled so as to deteriorate the appearance of the object to be drilled. To improve such problem, ribs, such as block-form ribs, linear ribs, arc ribs, sharp ribs and others, are developed to prevent the problem of the dregs on the outer side of the object to be drilled. However, all the prior arts are not perfect.

US 3322019 A is hereby acknowledged.

### SUMMARY OF THE INVENTION

To improve above mentioned problem of the prior art, the present invention provides a new screw which can cause that the dregs in screwing are compressed into the object so as to tighten the screw to the object to be drilled and no dregs expose out.

According to the present invention there is provided a screw capable of cutting and compressing dregs in an object to be drilled, comprising: a tapered head with a larger upper end and a small lower end, and a stem; at least one rib being formed on and winding around the tapered area of the head, wherein a Y axis is defined as an axis parallel to an axis of the head and the stem of the screw and an X axis is perpendicular thereto; wherein each of the rib is formed by an outer wall with a slope A formed with an angle with respect to said Y axis and an inner wall with a slope B formed with an angle with respect to said X axis; the connection of the inner wall and outer wall is formed as a sharp knife portion C; wherein, when the intersection of said Y axis and said X axis is placed on sharp knife portion C, said outer wall and said inner wall are disposed, respectively, in the upper two quadrants defined by said axes and the knife is a spiral knife winding around the tapered surface of the head.

Furthermore, preferable there are at least two ribs. Moreover, each rib winds around the tapered surface of the head with an angle being equal to or larger than 360 degrees.

Therefore, by above mentioned structure, in screwing, the ribs around the head will cut the dregs in drilling of the screw and then the dregs will be compressed by the head and then are pressed by the head into the object to be drilled so as to increase the tightness of the screws to the object to be drilled. Furthermore the outer side of the object is clean. The screw is tightly engaged to the object to be drilled.

### BRIEF DESCRIPTION OF THE DRAWINGS

Fig. 1 shows the embodiment of the present invention.
Fig. 2 is an elevational view of the present invention.

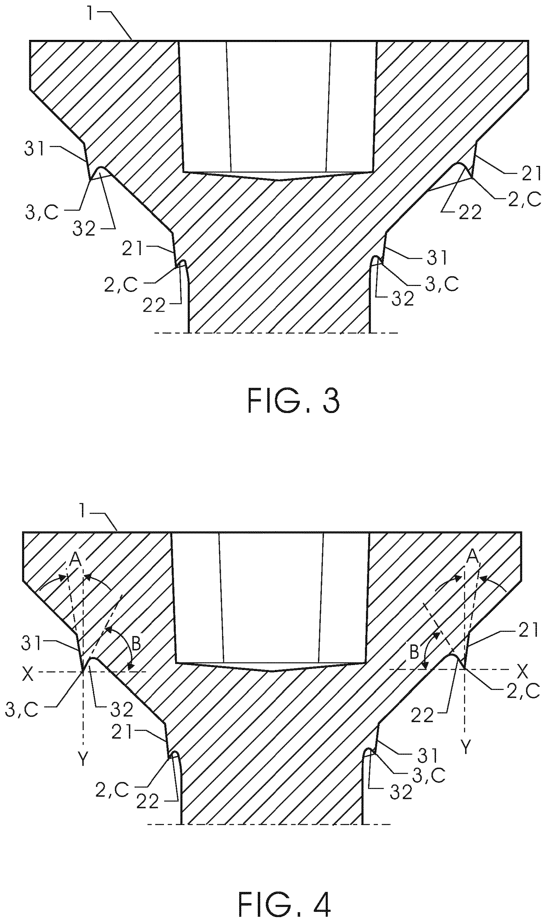

Fig. 3 is a cross sectional view of the present invention.
Fig. 4 is a schematic view showing the angle relation of the outer wall and inner wall of the rib of the present invention.

### DESCRIPTION OF THE IVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope of the present invention defined in the appended claims.

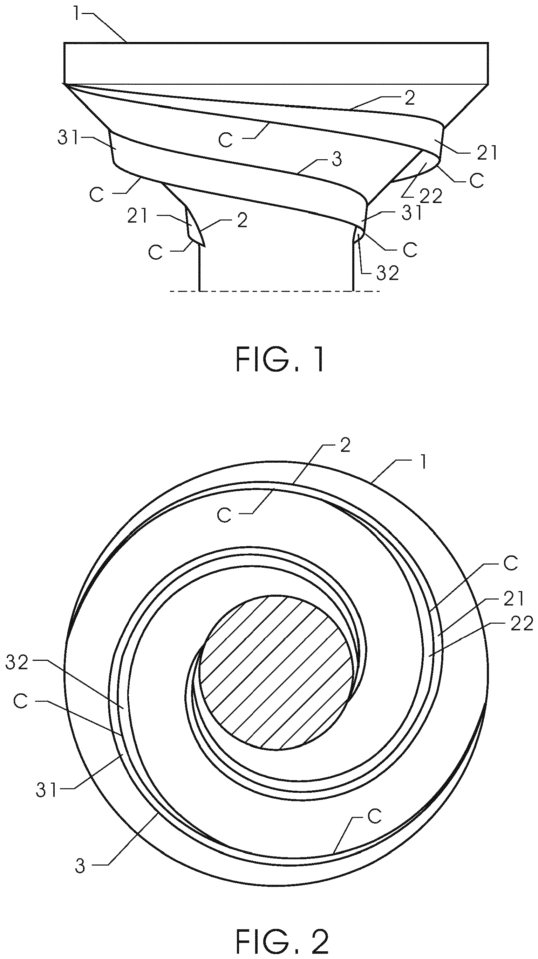

With reference to Fig. 1, the structure of the present invention is illustrated. The present invention includes a tapered head 1 with a larger upper end and a small lower end. At least one rib 2, 3 is formed on and winds around the tapered area of the head with a winding angle larger or equal to 360 degrees. In this embodiment, two ribs 2, 3 are shown. The ribs winds around the head counterclockwise.

Each of the ribs 2, 3 is formed by an outer wall 21, 31 with a slope A with respect to an outer wall of the tapered surface of the head and an inner wall 22, 32 with a slope B with respect to an outer wall of the tapered surface of the head. The connection of the inner wall 22,32 and outer wall 21,31 is formed as a sharp knife portion C. A Y axis is defined as an axis parallel to an axis of the head and the stem of the screw and an X axis is perpendicular thereto. As illustrated in the drawings, the outer wall 21,31 is in the right upper area divided by the X axis and the Y axis, and the inner wall 22,32 is in the left upper area divided by the X axis and the Y axis. The knife C is a spiral knife winding around the tapered surface of the head.

By above mentioned structure, in screwing, the ribs around the head will cut the dregs in drilling of the screw and then the dregs will be compressed by the head and then are pressed by the head into the object to be drilled so as to increase the tightness of the screws to the object to be drilled. Furthermore the outer side of the object is clean. The screw is tightly engaged to the object to be drilled.

The present invention is thus described, it will be apparent that the same may be varied in many ways.

## Claims

1. A screw capable of cutting and compressing dregs in an object to be drilled, comprising:
a tapered head (1) with a larger upper end and a small lower end, and a stem; at least one rib (2,3) being formed on and winding around the tapered area of the head, wherein a Y axis is defined as an axis parallel to an axis of the head and the stem of the screw and an X axis is perpendicular thereto;
wherein each of the rib (2,3) is formed by an outer wall (21,31) with a slope A formed with an angle with respect to said Y axis and an inner wall (22,32) with a slope B formed with an angle with respect to said X axis; the connection of the inner wall (22,32) and outer wall (21,31) is formed as a sharp knife portion C; wherein, when the intersection of said Y axis and said X axis is placed on sharp knife portion C, said outer wall and said inner wall are disposed, respectively, in the upper two quadrants defined by said axes and the knife is a spiral knife winding around the tapered surface of the head.

2. The screw capable of cutting and compressing dregs in an object to be drilled as claimed in claim 1, wherein there are two ribs (2,3).

3. The screw capable of cutting and compressing dregs in an object to be drilled as claimed in claim 1, wherein each rib (2,3) winds around the tapered surface of the head with an angle being equal to or larger than 360 degrees.

## Patentansprüche

1. Schraube, geeignet zum Schneiden und Komprimieren von Verunreinigungen in einem zu bohrenden Objekt, Folgendes umfassend:
einen abgeschrägten Kopf (1) mit einem größeren oberen Ende und einem kleineren unteren Ende und einen Schaft, wobei mindestens eine Rippe (2, 3) an dem abgeschrägten Bereich des Kopfes gebildet ist und sich um diesen herum windet, wobei eine Y-Achse als eine Achse definiert ist, die parallel zu einer Achse des Kopfes und des Schaftes der Schraube verläuft, und eine X-Achse senkrecht dazu verläuft,
wobei jede der Rippen (2, 3) durch eine äußere Wandung (21,31) mit einer Neigung A gebildet ist, die mit einem Winkel im Verhältnis zu der Y-Achse gebildet ist, und durch eine innere Wandung (22, 32) mit einer Neigung B gebildet ist, die mit einem Winkel im Verhältnis zur X-Achse gebildet ist, die Verbindung der inneren Wandung (22, 32) und der äußeren Wandung (21, 31) als ein scharfer Schneideabschnitt C gebildet ist, wobei, wenn der Schnittpunkt der Y-Achse und der X-Achse an dem scharfen Schneideabschnitt C platziert ist, die äußere Wandung beziehungsweise die innere Wandung in den oberen zwei Quadranten angeordnet sind, die durch die Achsen definiert sind, und die Schneide eine spiralförmige Schneide ist, die sich um die abgeschrägte Fläche des Kopfes herum windet.

2. Schraube, geeignet zum Schneiden und Komprimieren von Verunreinigungen in einem zu bohrenden Objekt, nach Anspruch 1, wobei zwei Rippen (2, 3) vorhanden sind.

3. Schraube, geeignet zum Schneiden und Komprimieren von Verunreinigungen in einem zu bohrenden Objekt, nach Anspruch 1, wobei sich jede Rippe (2, 3) mit einem Winkel von gleich oder größer als 360° um die abgeschrägte Fläche des Kopfes herum windet.

## Revendications

1. Vis en mesure de découper et de comprimer des dépôts dans un objet destiné à être percé, comportant :
une tête conique (1) avec une extrémité supérieure de plus grande taille et une extrémité inférieure de petite taille, et une tige ; au moins une nervure (2, 3) qui est formée sur, et s'enroulant autour de, la zone conique de la tête, dans laquelle un axe Y est défini comme étant un axe parallèle par rapport à un axe de la tête et de la tige de la vis et un axe X est perpendiculaire par rapport à celui-ci ;
dans laquelle chaque nervure (2, 3) est formée par une paroi extérieure (21, 31) avec une inclinaison A formée avec un angle par rapport audit axe Y et une paroi intérieure (22, 32) avec une inclinaison B formée avec un angle par rapport audit axe X ; la connexion de la paroi intérieure (22, 32) et de la paroi extérieure (21, 31) est formée sous la forme d'une partie formant couteau aiguisé C ; dans laquelle, quand l'intersection dudit axe Y et dudit axe X est placée sur la partie formant couteau aiguisé C, ladite paroi extérieure et ladite paroi intérieure sont disposées, respectivement, dans les deux quadrants supérieurs définis par lesdits axes et le couteau est un couteau en spirale qui s'enroule autour de la surface conique de la tête.

2. Vis en mesure de découper et de comprimer des dépôts dans un objet destiné à être percé selon la revendication 1, dans laquelle il y a deux nervures (2, 3).

3. Vis en mesure de découper et de comprimer des dépôts dans un objet destiné à être percé selon la revendication 1, dans laquelle chaque nervure (2, 3) s'enroule autour de la surface conique de la tête avec un angle qui est égal ou supérieur à 360 degrés.
